# EUROPÄISCHE PATENTSCHRIFT

(11) **EP 0 982 383 B1**
(45) Veröffentlichungstag und Bekanntmachung des Hinweises auf die Patenterteilung: **11.01.2006**
(21) Anmeldenummer: 99116472.4
(22) Anmeldetag: 21.08.1999
(51) Int. Cl.: C09J 4/00, C08F 220/18, C08F 220/06, C08F 8/44, C09J 151/00, B32B 27/10, B32B 7/12, C08J 5/12

(54) **Metallsalz vernetzte Klebstoffe**
Metal salt crosslinked adhesives
Adhésifs réticulés par sels de métal

(30) Priorität: 26.08.1998 DE 19838668
(43) Veröffentlichungstag der Anmeldung: 01.03.2000
(73) Patentinhaber: BASF Aktiengesellschaft, 67056 Ludwigshafen (DE)
(72) Erfinder: Kielhorn-Bayer, Sabine, Dr., 67133 Maxdorf (DE); Dames, Burkhardt, Dr., 67069 Ludwigshafen (DE); Schumacher, Karl-Heinz, Dr., 67433 Neustadt (DE)

(56) Entgegenhaltungen:
- EP-A- 0 373 918
- EP-A- 0 442 370
- DE-A- 19 649 383
- DE-B- 1 051 436

## Beschreibung

### Die Erfindung betrifft die Verwendung von

Klebstoffen, enthaltend als Bindemittel eine wäßrige Dispersion eines Polymeren aus radikalisch polymerisierbaren Verbindungen (Monomeren), wobei es sich bei 0,1 bis 20 Gew.-% der Monomeren, bezogen auf die Gesamtmenge der Monomeren, um ethylenisch ungesättigte Säuren handelt, deren Säuregruppen mindestens zu 20 mol-% als Salz von mindestens zweiwertigen Metallen vorliegen, als Kaschierklebstoffe.

Insbesondere betrifft die Erfindung die Verwendung der vorstehenden Klebstoffe in der Glanzfolienkaschierung.

Bekannt ist, wäßrige Dispersionen von vernetzbaren Polymeren als Klebstoffe, bzw. als Bindemittel in Klebstoffen zu verwenden. In EP-A-644902 werden derartige wäßrige Polymerdispersionen beschrieben, welche Hydroxylamine oder Oximether als Vernetzer enthalten. Die Polymere vernetzen mit den Hydroxylaminen oder Oximethern bei Raumtemperatur nach Entfernung des Dispersions-Wassers.

Vorstehende Vernetzungssysteme erfordern einen speziellen Polymeraufbau, insbesondere sind Monomere mit Carbonylgruppen notwendig für die Vernetzungsreaktion.

Gewünscht sind generell alternative Vernetzungssysteme aus möglichst einfachen und leicht zugänglichen Monomeren und Vernetzern. Derartige neue Vernetzungssysteme müßten eine Reihe von Anforderungen erfüllen. Insbesondere müßten wäßrige Polymerdispersionen, welche den Vernetzer bereits enthalten, lagerstabil sein, so daß einkomponentige Systeme möglich sind (keine Zugabe des Vernetzers, erst kurz vor der späteren Anwendung). Die Vernetzungsreaktion sollte ohne Temperaturerhöhung eintreten.

Für Klebstoffe sind gute Klebeigenschaften insbesondere eine möglichst gute Adhäsion und Kohäsion gewünscht. Bei der Verwendung der Klebstoffe in Glanzfolienkaschierung ist eine gute Haftung zu den Substraten (transparente Polymerfolien und Papier, bzw. Karton) und eine hohe Elastigkeit der erhaltenen Laminate von Bedeutung.

Da die Folienverbunde transparent sein sollen, müssen die Klebstoffe auch frei sein von feinem Koagulat sowie alterungs-, lichtbeständig und schaumarm sein.

Die Verarbeitung in den Kaschieranlagen setzt eine hohe Scherstabilität und gute Fließeigenschaften voraus.

Insbesondere gewünscht ist eine hohe Sofortfestigkeit der hergestellten Verbunde. Eine hohe Sofortfestigkeit (Schälfestigkeit, gemessen unmittelbar nach der Herstellung des Verbundes) bietet den Vorteil, daß der Folienverbund rasch weiterverarbeitet werden kann. Dieser Weiterverarbeitung kann z. B. die weitere Konfektionierung des Verbundes (Schneiden, Stanzen, Falten, Siegeln) sein.

Wäßrige Polymerdispersionen, die Carboxylate von zweiwertigen Metallen enthalten, sind z. B. aus EP 442370 und DE 1051436 bereits bekannt.

In der DE-A 196 49 383 werden Polymerisate beschrieben, die aus
- 5 bis 95 Gew.-%: eines Gemisches aus mindestens einem C₂- bis C₄-Alkylacrylat und mindestens einem C₆- bis C₁₂-Alkylacrylat (Monomere a),
- 5 bis 30 Gew.-%: ethylenisch ungesättigten Verbindungen mit einer Glasübergangstemperatur oberhalb 0°C, welche, abgesehen von der ethylenisch ungesättigten Gruppe, keine weiteren funktionellen Gruppen enthalten (Monomere b)
- 0 bis 10 Gew.-%: ethylenisch ungesättigten Verbindungen mit mindestens einer Säure- oder Säureanhydridgruppe (Monomere C) und
- 0 bis 60 Gew.-%: weiteren ethylenisch ungesättigten Verbindungen (Monomere d),

aufgebaut sind, sowie deren Verwendung als Klebstoffe und Kaschierklebstoffe. Die Säuregruppen der beschriebenen wäßrigen Polymerdispersionen können als Salze einwertiger Metallionen vorliegen.

Aufgabe der vorliegenden Erfindung waren Klebstoffe auf Basis vernetzbarer Polymere, welche die vorstehenden Anforderungen erfüllen.

Demgemäß wurde die Verwendung der eingangs definierten Klebstoffe in der Glanzfolienkaschierung gefunden.

Die Klebstoffe enthalten vorzugsweise ein Polymer, welches aufgebaut ist aus
a) 20 bis 99,9 Gew.-%, bevorzugt 60 bis 99,5 Gew.-%, besonders bevorzugt 80 bis 99,5 Gew.-% mindestens eines Hauptmonomeren
b) 0,1 bis 20 Gew.-%, bevorzugt 0,5 bis 10 Gew.-%, besonders bevorzugt 0,5 bis 5 Gew.-% einer ethylenisch ungesättigten Säure, deren Säuregruppen zu mindestens 20 mol-% als Salz von mindestens zweiwertigen Metallen vorliegt
c) 0 bis 70 Gew.-%, bevorzugt 0 bis 35 Gew.-%, besonders bevorzugt aus 0 bis 15 Gew.-% weiterer Monomere (Monomere c).

Hauptmonomere a) sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylatsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als Monomere (a) kommen bevorzugt die C₁- bis C₁₀-Alkylacrylate und -methacrylate, insbesondere die (C₁- bis C₈-Alkyl)acrylate und -methacrylate in Betracht, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere als Monomere (a).

Besonders bevorzugt enthält das Polymer mindestens 5 Gew.-%, vorzugsweise mindestens 15 Gew.-% Methyl- oder Ethylacrylat und mindestens 5 Gew.-%, vorzugsweise mindestens 15 Gew.-% n-Butylacrylat. Die Gewichtsangaben sind auf das Polymer bezogen.

Bei Monomeren b) handelt es sich z. B. um Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere c) sind z. B. Hydroxylgruppen enthaltende Monomere, insbesondere C₁-C₁₀-Hydroxyalkyl(meth)acrylate, (Meth)acrylamid.

Als weitere Monomere c) seien darüberhinaus Phenyloxyethylglykolmono- (meth-)acrylat, Glydidylacrylat, Glycidylmethacrylat, Amino- (meth-)acrylate wie 2-Aminoethyl- (meth-)acrylat genannt.

Monomere c), die außer der Doppelbindung noch weitere funktionelle Gruppen tragen, z. B. Isocyanat-, Amino-, Hydroxy-, Amid-oder Glycidyl-, können z. B. die Haftung auf Substraten verbessern.

Bevorzugt liegen mindestens 40 mol-%, besonders bevorzugt mindestens 70 mol-%, ganz besonders bevorzugt 100 mol-% der Säuregruppen der Säuren b) als Salz von mindestens zweiwertigen Metallen vor.

Bei den Metallen handelt es sich z. B. um zwei- oder dreiwertige Metalle, vorzugsweise um zweiwertige Metalle, insbesondere um Ca, Mg, Zn oder Mg.

Besonders bevorzugt handelt es sich um Ca.

Die Überführung der Säuregruppen in die Salze kann erfolgen durch Zugabe von basischen Verbindungen der Metalle, insbesondere durch die Hydroxylverbindungen. Geeignet ist zum Beispiel Ca(OH)₂.

Die Überführung der Säuregruppen in die Salzgruppen kann bereits vor Durchführung der Polymerisation, während oder nach der Polymerisation der Monomeren erfolgen.

Bevorzugt erfolgt die Überführung in die Salzgruppen nach erfolgter Polymerisation durch Zugabe der basischen Metallverbindungen zur erhaltenen wäßrigen Polymerdispersion.

Die Glasübergangstemperatur des aus den Monomeren a) bis c) erhaltenen Polymeren liegt bevorzugt unter 60°C, insbesondere beträgt sie -50 bis +60°C, besonders bevorzugt -30 bis +40°C und ganz besonders bevorzugt -30 bis +20°C.

Die Glasüberganstemperatur des Polymerisats läßt sich nach üblichen Methoden wie Differentialthermoanalyse oder Differential Scanning Calorimetrie (s. z. B. ASTM 3418/82, sog. "midpoint temperature") bestimmen.

Die Herstellung des Polymeren erfolgt vorzugsweise durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈₋bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsälze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 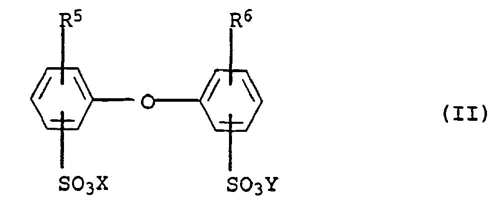
worin R⁵ und R⁶ Wasserstoff oder C₄- bis C₁₄-Alkyl bedeuten und nicht gleichzeitig Wasserstoff sind, und C und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan@ NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sich insbesondere sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan. Der Anteil dieser Regler kann im Falle der Verwendung als Klebstoff für die Verbundfolienkaschierung insbesondere 0,05 bis 0,8 Gew.-Teile, bevorzugt 0,1 bis 0,5 Gew.-Teile bezogen auf 100 Gew.-Teile der zu polymerisierenden Monomeren betragen. Im Falle der Verwendung als Klebstoff für die Glanzfolienkaschierung ist die Mitverwendung eines Reglers weniger bevorzugt. Die Regler enthalten keine polymerisierbare, ethylenisch ungesättigte Gruppe. Die Regler bewirken einen Abbruch der Polymerisationskette und werden daher endständig an die Polymerketten gebunden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymeristionsgefäß vorgelegt, als auch nach Maßgabe seines Verbrauchers im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi-oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das Polymerisat wird in Form seiner wäßrigen Dispersion verwendet.

Die Dispersion eignet sich als Kaschierklebstoff zum Verkleben von großflächigen Substraten, d. h. zur Herstellung von Laminaten.

Der Dispersion kann für die Verwendung als Kaschierklebstoff weitere übliche Zusatzstoffe, z. B. Netzmittel, Verdicker, Schutzkolloide, Lichtschutz-Stabilisatoren, Biozide enthalten.

Das Polymerisat bzw. die Dispersion benötigt nicht den Zusatz von weichmachenden Harzen (Tackifiern) von Weichmachern und auch nicht den Zusatz von Vernetzern, sonstigen Reaktivkomponenten oder Mischungskomponenten um die gewünschten Eigenschaften bei der erfindungsgemäßen Verwendung als Kaschierklebstoff zu erreichen.

Bei der erfindungsgemäßen Verwendung als Kaschierklebstoff wird die Dispersion auf die großflächigen Substrate vorzugsweise mit einer Schichtdicke von 0,1 bis 20, besonders bevorzugt 2 bis 7 g/m² z. B. durch Rakeln, Streichen etc. aufgetragen.

Nach kurzer Zeit zur Ablüftung des Dispersionswasser (vorzugsweise nach 1 bis 60 Sekunden) kann die das beschichtete Substrat dann mit einem zweiten Substrat kaschiert werden, wobei die Temperatur z. B. 20 bis 200, vorzugsweise 20 bis 70°C und der Druck z. B. 1 bis 30, vorzugsweise 3 bis 20 N/m² betragen kann.

Als Substrate eignen sich z. B. Polymerfolien, insbesondere aus Polyethylen, orientiertem Polypropylen, Polyamid, Polyethylenterephthalat, Celluloseacetat, Zellglas, mit Metall (z. B. Aluminium beschichtet (bedampfte) Polymerfolie (kurz: metallisierte Folien) oder auch Papier, Karton oder Metallfolien, insbesondere aus Aluminium. Die genannten Folien können auch z. B. mit Druckfarben bedruckt sein.

Das Polymerisat bzw. die Dispersion wird bevorzugt als Klebstoff für die Glanzfolienkaschierung verwendet.

Bei der Glanzfolienkaschierung werden Papier oder Karton mit transparenten Polymerfolien verklebt.

Die wäßrigen Dispersionen haben gute Klebeeigenschaften, insbesondere auch bei der Glanzfolienkaschierung. Bei der Glanzfolienkaschierung ist vor allem eine gute Haftung der transparenten Polymerfolien auf Papier oder Karton von Bedeutung. Die Polymerfolie muß auch im Bereich von Nuten gut haften und darf sich nicht vom Papier oder Karton ablösen. Insbesondere ist natürlich auch ein hoher Glanz gewünscht. All diese Erfordernisse werden im Falle des erfindungsgemäßen Verfahrens bzw. bei der erfindungsgemäßen Verwendung erfüllt.

### Beispiele

### A) Herstellung von Polymerdispersionen

Die Herstellung erfolgt nach folgender allgemeiner Vorschrift:

Die Vorlage (250 g Wasser und 3 g einer Styrolsaat (33 %ig) mit einem mittleren Teilchendurchmesser von 30 nm) wurde auf 85°C Innentemperatur aufgeheizt und 5 % Zulauf 2 vorgelegt. Nach 10 min. Wartezeit wurden Zulauf 1 und Zulauf 2 gestartet.

Zulauf 2 bestand aus 3,0 g Natriumperoxodisulfat gelöst in 39,9 g Wasser. Die Zusammensetzung von Zulauf 1 ist in den Tabellen 1-3 angegeben.

Zulauf 1 und 2 wurden in 3 h zudosiert und 0,5 h nach polymerisiert.

Die Proben wurden vor der anwendungstechnischen Prüfung mit einer 15 %igen, wäßrigen Ca(OH)₂ Suspension (20g) neutralisiert

Bei den Vergleichsversuchen wurde 25 %ige, wäßrige NaOH (20g) verwendet.

**Tabelle 1 Zulauf 1**

| Nr. | H₂O [g] | BA [g] | MA [g] | AS [g] | Dow(45%i g) [g] | IRA(50%i g) [g] | Ca(OH)₂ [g] |
|---|---|---|---|---|---|---|---|
| 1 | 537.8 | 780 | 200 | 20 | 8.9 | 12 | 20 |
| 2 | 537.8 | 730 | 250 | 20 | 8.9 | 12 | 20 |
| 3 | 537.8 | 680 | 300 | 20 | 8.9 | 12 | 20 |
| 4 | 537.8 | 630 | 350 | 20 | 8.9 | 12 | 20 |
| 5 | 537.8 | 580 | 400 | 20 | 8.9 | 12 | 20 |

**Tabelle 2: Zulauf 1 (Vergleich)**

| Nr. | H₂O [g] | BA [g] | MA [g] | AS [g] | Dow(45%ig) [g] | IRA(50%ig) [g] | NaOH(25%ig) [g] |
|---|---|---|---|---|---|---|---|
| 6 | 537.8 | 780 | 200 | 20 | 8.9 | 12 | 20 |
| 7 | 537.8 | 730 | 250 | 20 | 8.9 | 12 | 20 |
| 8 | 537.8 | 680 | 300 | 20 | 8.9 | 12 | 20 |
| 9 | 537.8 | 630 | 350 | 20 | 8.9 | 12 | 20 |
| 10 | 537.8 | 580 | 400 | 20 | 8.9 | 12 | 20 |

### Abkürzungen:

- Dow:: Dowfax 2A1: 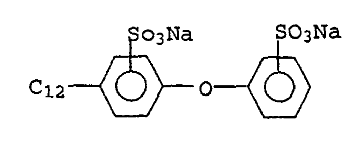
- IRA:: Lumiten IRA: 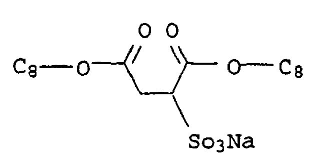
- BA:: n-Butylacrylat
- MA:: Methylacrylat
- MMA:: Methylmethacrylat
- AS:: Acrylsäure
- DAAM:: Diacetonacrylamid
- NaVS:: Natriumvinylsulfonat
- AMPS:: Acrylamidopropansulfonsäure
- ADDH:: Adipinsäuredihydrazid (Vernetzer, der mit Carbonylgruppen vernetzt)

### B) Glanzfolienkaschierung

Glanzfolienkaschierung mit Karton (Cromoduplex-Karton) und Polypropylen (Corona-vorbehandelt) und mit Karton und Celluloseacetatfolie

Die vorbehandelte Seite der Polypropylenfolie (PP) wurde mit Klebstoff beschichtet. Nach dem Trocknen mit Kaltluft wurde der Karton aufgelegt und mit einer Laborkaschierrolle angerollt. Die zugeschnittenen Kaschierungen wurden in der Rollenpresse gepreßt.

Die Haftung wurde durch Abziehen der Folie vom Karton im Winkel von ca. 180 Grad geprüft.

### Auswertung:

- 1 =: Vollflächiger Papier- oder Farbausriß
- 2 =: Teilweiser Papier- oder Farbausriß
- 3 =: Gute Haftung mit Adhäsionsbruch Karton oder Folie (AK, AF)
- 4 =: Schwache Haftung mit AK oder AF
- 5 =: Keine Haftung auf Karton oder Folie

Zur Bestimmung der Nutstandfestigkeit wurden die kaschierten Proben 24 Stunden nach der obigen Herstellung genutet.

### Beurteilung der Nutung:

- 1 =: Nut ist vollständig in Ordnung
- 2 =: Nut ist nur an vereinzelten Stellen leicht geöffnet
- 3 =: Nut ist an einzelnen Stellen deutlich geöff net
- 4 =: Nut ist vollständig offen

Die gleiche Prüfung wurde mit Polyacetatfolie durchgeführt.

Die Ergebnisse sind in den Tabellen 3 und 4 (erfindungsgemäß) und 5 und 6 (Vergleich) aufgelistet.

**Tabelle 3: PP-Folie wurde beschichtet, Cromoduplex-Karton zukaschiert**

| | Haftung | | Nutung | |
|---|---|---|---|---|
| | n. 1 Tag | n. 1 Woche | n. 1 Tag | n. 1 Woche |
| 1 | 1 | 1 | 1 | 1 |
| 2 | 1 | 1 | 1 | 1 |
| 3 | 1 | 1 | 1 | 1 |
| 4 | 1 | 1 | 1 | 1 |
| 5 | 1 | 1 | 1 | 1 |

**Tabelle 4: Acetat-Folie wurde beschichtet, Cromoduplex-Karton zukaschiert**

| | Haftung | | Nutung | |
|---|---|---|---|---|
| | n. 1 Tag | n. 1 Woche | n. 1 Tag | n. 1 Woche |
| 1 | 1 | 1 | 1 | 1 |
| 2 | 1 | 1 | 1 | 1 |
| 3 | 1 | 1 | 1 | 2 |
| 4 | 1 | 1 | 1 | 1 |
| 5 | 1 | 1 | 1 | 1 |

**Tabelle 5: PP-Folie wurde beschichtet, Cromoduplex-Karton zukaschiert**

| | Haftung | | Nutung | |
|---|---|---|---|---|
| | n. 1 Tag | n. 1 Woche | n. 1 Tag | n. 1 Woche |
| 6 | 2 | 2 | 2 | 2 |
| 7 | 2 | 2 | 1 | 1 |
| 8 | 2 | 2 | 1 | 2 |
| 9 | 2 | 2 | 1 | 1 |
| 10 | 2 | 2 | 2 | 2 |

**Tabelle 6: Acetat-Folie wurde beschichtet, Cromoduplex-Karton zukaschiert**

| | Haftung | | Nutung | |
|---|---|---|---|---|
| | n. 1 Tag | n. 1 Woche | n. 1 Tag | n. 1 Woche |
| 6 | 2 | 2 | 2 | 2 |
| 7 | 2 | 2 | 1 | 1 |
| 8 | 2 | 2 | 2 | 1 |
| 9 | 2 | 2 | 1 | 1 |
| 10 | 2 | 2 | 2 | 2 |

## Patentansprüche

1. Verwendung von Klebstoffen, enthaltend als Bindemittel eine wäßrige Dispersion eines Polymeren aus radikalisch polymerisierbaren Verbindungen (Monomeren), wobei es sich bei 0,1 bis 20 Gew.-% der Monomeren, bezogen auf die Gesamtmenge der Monomeren, um ethylenisch ungesättigte Säuren handelt, deren Säuregruppen zu mindestens 20 mol-% als Salz von mindestens zweiwertigen Metallen vorliegen, als Kaschierklebstoffe oder Glanzfolienpapierklebstoffe.

2. Verwendung von Klebstoffen gemäß Anspruch 1 als Kaschierklebstoffe oder Glanzfolienpapierklebstoffe, wobei das Polymer aufgebaut ist aus
a) 20 bis 99,9 Gew.-% Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen und aliphatischen Kohlenwasserstoffen mit 2 bis 8 C-Atomen und 1 oder 2 Doppelbindungen
b) 0,1 bis 20 Gew.-% ethylenisch ungesättigten Säuren, deren Säuregruppen zu mindestens 20 mol-% als Salze von mindestens zweiwertigen Metallen vorliegen
c) 0 bis 70 Gew.-% weiteren Monomeren

3. Verwendung von Klebstoffen gemäß Anspruch 1 oder 2 als Kaschierklebstoffe oder Glanzfolienpapierklebstoffe, wobei mindestens 40 mol-% der Säuregruppen als Salze von mindestens zweiwertigen Metallen vorliegen.

4. Verwendung von Klebstoffen gemäß einem der Ansprüche 1 bis 3 als Kaschierklebstoffe oder Glanzfolienpapierklebstoffe, wobei es sich bei dem Metall um Ca, Zn oder Mg handelt.

5. Verwendung von Klebstoffen gemäß einem der Ansprüche 1 bis 4 als Kaschierklebstoffe oder Glanzfolienpapierklebstoffe, wobei das Polymer eine Glasübergangstemperatur von -50 bis +60°C hat.

6. Verfahren zur Herstellung von Laminaten durch Verkleben von großflächigen Substraten, **dadurch gekennzeichnet, daß** ein Klebstoff gemäß einem der Ansprüche 1 bis 5 auf mindestens eins der zu verklebenden Substrate aufgetragen wird und die Substrate nach Entfernung des Wassers miteinander verklebt werden

7. Verfahren gemäß Anspruch 6, **dadurch gekennzeichnet, daß** transparente Polymerfolien mit Papier oder Karton verklebt werden.

8. Verfahren gemäß Anspruch 7, **dadurch gekennzeichnet, daß** die Polymerfolie mit dem Klebstoff beschichtet wird, Wasser entfernt wird und die beschichtete Folie anschließend bei Temperaturen von 20 bis 200°C und einem Anpreßdruck von 1 bis 30 N/m² mit Papier oder Karton gesiegelt wird.

9. Laminate erhältlich nach einem Verfahren gemäß einem der Ansprüche 6 bis 8.

## Claims

1. The use of an adhesive comprising as binder an aqueous dispersion of a polymer formed from free-radically polymerizable compounds (monomers), wherein from 0.1 to 20% by weight of the monomers, based on the overall amount of the monomers, are ethylenically unsaturated acids at least 20 mol% of whose acid groups are present as a salt of at least divalent metals, as a laminating adhesive or as a gloss film paper adhesive.

2. The use of an adhesive according to claim 1 as a laminating adhesive or as a gloss film paper adhesive, wherein the polymer is composed of
a) from 20 to 99.9% by weight of principal monomers selected from C₁-C₂₀-alkyl (meth)acrylates, vinyl esters of carboxylic acids comprising up to 20 carbon atoms, vinylaromatic compounds having up to 20 carbon atoms, ethylenically unsaturated nitriles, vinyl halides, vinyl ethers of C₁-C₁₀ alcohols, and aliphatic hydrocarbons having 2 to 8 carbon atoms and 1 or 2 double bonds
b) from 0.1 to 20% by weight of ethylenically unsaturated acids at least 20 mol% of whose acid groups are present in the form of salts of at least divalent metals
c) from 0 to 70% by weight of further monomers.

3. The use of an adhesive according to claim 1 or 2 as a laminating adhesive or as a gloss film paper adhesive, wherein at least 40 mol% of the acid groups are present in the form of salts of at least divalent metals.

4. The use of an adhesive according to any one of claims 1 to 3 as a laminating adhesive or as a gloss film paper adhesive, wherein the metal is Ca, Zn or Mg.

5. The use of an adhesive according to any one of claims 1 to 4 as a laminating adhesive or as a gloss film paper adhesive, wherein the polymer has a glass transition temperature of from -50 to +60°C.

6. A process for producing a laminate by bonding substrates of large surface area, which comprises applying an adhesive according to any one of claims 1 to 5 to at least one of the substrates to be bonded and bonding the substrates to one another after removing the water.

7. The process according to claim 6, wherein transparent polymer films are bonded to paper or card.

8. The process according to claim 7, wherein the polymer film is coated with the adhesive, water is removed, and the coated film is subsequently sealed with paper or card at temperatures from 20 to 200°C under a pressure of from 1 to 30 N/m².

9. A laminate obtainable by a process according to any one of claims 6 to 8.

## Revendications

1. Utilisation comme adhésifs de contrecollage ou adhésifs pour papier à film brillant d'adhésifs qui contiennent comme agent liant une dispersion aqueuse d'un polymère de composés (monomères) aptes à être polymérisés par radicaux et dont entre 0,1 et 20 % en poids par rapport à la quantité totale des monomères sont des acides éthyléniquement insaturés dont au moins 20 % en moles des groupes acide présentent la forme de sel de métaux au moins bivalents.

2. Utilisation d'adhésifs selon la revendication 1 comme adhésifs de contrecollage ou adhésifs pour papier à film brillant, dont le polymère est constitué de :
a) entre 20 et 99,9 % en poids de monomères principaux sélectionnés parmi les (méth)acrylates d'alkyle en C₁ à C₂₀, les vinylesters d'acides carboxyliques qui comptent jusque 20 atomes de C, les aromates de vinyle qui comptent jusque 20 atomes de C, les nitriles éthyléniquement insaturés, les halogénures de vinyle, les éthers d'alcool vinylique qui comptent entre 1 et 10 atomes de C et les hydrocarbures aliphatiques qui comptent entre 2 et 8 atomes de C et 1 ou 2 doubles liaisons,
b) entre 0,1 et 20 % en poids d'acides éthyléniquement insaturés dont au moins 20 % en moles des groupes acides présentent la forme de sel de métaux au moins bivalents et
c) entre 0 et 70 % en poids d'autres monomères.

3. Utilisation d'adhésifs selon la revendication 1 ou 2 comme adhésifs de contrecollage ou adhésifs pour papier à film brillant, dont au moins 40 % en moles des groupes acides présentent la forme de sels de métaux au moins bivalents.

4. Utilisation d'adhésifs selon l'une des revendications 1 à 3 comme adhésifs de contrecollage ou adhésifs pour papier à film brillant, dont le métal est le Ca, le Zn ou le Mg.

5. Utilisation d'adhésifs selon l'une des revendications 1 à 4 comme adhésifs de contrecollage ou adhésifs pour papier à film brillant, dont le polymère a une température de transition vitreuse comprise entre -50 et +60°C.

6. Procédé de fabrication de stratifiés par collage de supports de grande surface, **caractérisé en ce que** l'on apporte un adhésif selon l'une des revendications 1 à 5 sur au moins l'un des supports à coller et que l'on colle les supports ensemble après avoir retiré l'eau.

7. Procédé selon la revendication 6, **caractérisé en ce que** l'on colle des films polymères transparents sur du papier ou du carton.

8. Procédé selon la revendication 7, **caractérisé en ce que** l'on revêt le film polymère d'adhésif, on retire l'eau et, à une température comprise entre 20 et 200°C et en appliquant une pression comprise entre 1 et 30 N/m², on scelle ensuite le film revêtu sur du papier ou du carton.

9. Stratifié obtenu avec un procédé selon l'une des revendications 6 à 8.
